# FASCICULE DE BREVET EUROPEEN

(11) **EP 2 035 884 B1**
(45) Date de publication et mention de la délivrance du brevet: **14.07.2010**
(21) Numéro de dépôt: 06841996.9
(22) Date de dépôt: 03.11.2006
(51) Int. Cl.: G02C 5/14, G02C 11/02

(54) **BRANCHE DE LUNETTES ET LUNETTES COMPORTANT UNE TELLE BRANCHE**
BÜGEL FÜR BRILLEN UND BRILLEN MIT EINEM SOLCHEN BÜGEL
SIDE-PIECE FOR SPECTACLES AND SPECTACLES COMPRISING SUCH A SIDE-PIECE

(30) Priorité: 21.06.2006 FR 0605528
(43) Date de publication de la demande: 18.03.2009
(73) Titulaire: Denis Buffard Société Par Actions Simplifiée, 39400 Les Rousses (FR)
(72) Inventeur: BUFFARD, Denis, 39220 Les Rousses (FR); PONARD VUILLEMEY, Gérard, 39130 Doucier (FR)
(74) Mandataire: Rhein, Alain
(86) Numéro de dépôt international: PCT/FR2006/051135
(87) Numéro de publication internationale: WO 2007/147953

(56) Documents cités:
- EP-A1- 0 411 130
- EP-B1- 0 901 648
- WO-A-98/23994
- FR-A3- 2 547 430
- US-B1- 6 652 093

## Description

L'invention concerne le domaine de la lunetterie.

Il est de plus en plus courant de proposer dans le commerce des lunettes que l'on peut qualifier de modulaires en ce sens que les éléments qui les composent sont, selon le cas, interchangeables ou susceptibles de recevoir, par adjonction, des éléments venant à modifier leur aspect esthétique.

L'inconvénient majeur de ce type de lunettes modulables, réside dans la possibilité de disperser et de perdre les composants. Très souvent, au final, l'utilisateur se contente de donner à ses lunettes une esthétique définitive, puisque, faute de retrouver l'une ou l'autre des pièces interchangeables, ou de ne pas en disposer au moment opportun, il finit par conserver ces lunettes dans leur aspect esthétique qu'il leur a conféré à l'origine.

Pour remédier à ce risque de perte de pièces tout en offrant à l'usager la possibilité d'adapter le caractère esthétique de la monture de ses lunettes, il est d'ores et déjà connu, en particulier par le document EP-B-0 901 648, des lunettes dont la monture est équipée de branches dont l'aspect esthétique peut être modifié par retournement d'un profilé d'habillage monté de manière pivotante sur ces branches.

Plus exactement, celles-ci sont définies par une tige formant armature dont une extrémité est rendue solidaire d'un charnon du pivot reliant cette branche, selon le cas, au cerclage ou au verre lui-même.

A l'extrémité opposée, cette tige reçoit l'embout de branche sous forme d'un support d'oreille.

A ce propos, l'embout de branche comporte un évidement pour le logement d'un ressort venant s'intercaler entre un rebord de butée interne à cet évidement et un flasque d'appui qui termine ladite tige.

En d'autres termes, l'action du ressort a pour conséquence de repousser le flasque d'appui en fond d'évidement de l'embout de branche qui, de ce fait, est tiré en direction de l'extrémité opposée de cette branche.

En somme, au travers de cette conception, cet embout de branche peut être tiré dans une position correspondant au déblocage en rotation du profilé d'habillage autour de ladite tige. A l'inverse, en relâchant l'action exercée sur l'embout de branche, le ressort repousse l'ensemble dans une position de blocage conduisant à l'immobilisation en rotation de ce profilé d'habillage. D'ailleurs, celui-ci est équipé, à chacune de ses extrémités, d'un tenon qui, par coopération avec des mortaises ménagées, selon le cas, au niveau du charnon, à une extrémité de la tige et, à l'extrémité opposée, dans l'évidement de l'embout de branche, assure cette fonction de blocage en rotation.

Au vu de ce qui précède, l'on comprend que, repoussé dans la position de déblocage, l'embout de branche est lui-même libre en rotation, son positionnement dépendant, strictement, du profil d'habillage.

Il s'avère, justement, qu'il est quasiment impossible d'obtenir, pour chacune des positions que peut emprunter le profil d'habillage autour de la tige, une même position angulaire de l'embout de branche par rapport à la monture de lunette. Or, cette position angulaire doit être strictement adaptée à la morphologie de l'usager, faute de quoi les lunettes ne peuvent se maintenir convenablement en position sur le nez de leur utilisateur.

Ainsi, c'est dans le cadre d'une démarche inventive que l'on a imaginé une branche de lunettes dont la fonction première, c'est-à-dire garantir un parfait maintien des lunettes sur l'usager, ne soit pas altéré par des réglages qui, au final, ne sont proposés à cet usager que dans un but esthétique.

Le document US 6,652,093 montre une branche de lunette comprenante un élément décoratif pivotable autour d'une tige, et maintenu dans une position de blocage par l'action d'un ressort et d'une bille, montés dans l'élément décoratif transversalement à la tige.

Pour la résolution du problème posé, en se différentiant de US 6, 652, 093, l'invention concerne une branche de lunette définie comme dans la revendication 1.

Selon une autre particularité de l'invention, la tige comporte, à son extrémité conçue apte à être solidarisée à un verre ou à un cerclage de verre, un rebord de retenue conçu apte à coopérer avec le profilé d'habillage, pour assurer le blocage en rotation de ce dernier dans au moins deux positions angulaires différentes.

Avantageusement, la seconde position correspond à un retournement de 180 ° du profilé d'habillage autour de la tige.

Selon une autre particularité de l'invention, les moyens de rappels élastiques sont conçus aptes à repousser le profilé d'habillage en direction d'un rebord de blocage à l'extrémité de la tige définie à même d'être solidarisée d'un cerclage de verre ou d'un verre.

Selon un premier mode de réalisation avantageux, les moyens de rappels élastiques sont définis par un ressort hélicoïdal prenant position dans un logement pratiqué à une extrémité du profilé d'habillage en regard de l'embout de branche, ledit ressort étant maintenu sous contrainte entre le fond de l'évidement et un rebord de butée le long de la tige.

Avantageusement, le rebord de butée est défini par l'embout de branche sur ladite tige.

Les avantages qui découlent de la présente invention consistent, essentiellement, en ce que les parties d'une branche de lunettes qui contribuent au maintien des lunettes convenablement sur l'usager, sont capables d'occuper une position immuable, plus exactement non dépendante de la modularité esthétique de cette branche de lunette de sorte que la qualité première que l'on demande à une telle branche ne risque pas d'être altérée sous des prétextes purement d'esthétisme.

Pour autant, on peut, très facilement, modifier l'aspect esthétique de la branche qui, par ailleurs, conserve une conception simple, donc d'un coût de revient réduit, sachant que la simplicité de conception est également gage de longévité.

D'autres buts et avantages de la présente invention apparaîtront à la description qui va suivre se rapportant à un exemple de réalisation donné à titre indicatif et non limitatif.

La compréhension de cette description sera facilitée en se référant au dessin ci-joint, dans lequel :
- la figure 1 est une représentation schématisée et en élévation d'une branche de lunette conforme à l'invention ;
- la figure 2 illustre, de manière schématisée, le pivotement du profilé d'habillage pour une modification d'esthétisme de la branche ;
- la figure 3 est une représentation similaire à la figure 1 représentant le profilé d'habillage après pivotement dans une seconde position ;
- la figure 4 est une représentation schématisée et vue de dessus de la branche, telle que représentée dans la figure 3 ;
- la figure 5 est une vue schématisée et en coupe longitudinale de la figure 4.

Tel que visible dans les figures du dessin ci-joint, la présente invention concerne le domaine de la lunetterie et a trait, plus particulièrement, à une branche de lunette 1.

De manière plus particulière, la branche 1 comporte une tige 4 formant armature, sur l'extrémité 5 de laquelle est rendue solidaire, fixement, un embout de branche 2. De plus, conformément à l'invention, à son extrémité opposée 6 cette tige 4 est définie apte à être solidarisée, de manière immobilisée en rotation autour de son axe, selon le cas, soit d'un cerclage de verre soit d'un verre directement.

En outre, sur ladite tige 4 est engagé, de manière pivotante, un profilé d'habillage 7 apte à être immobilisé en rotation au travers de moyens de blocage 8, ceci dans au moins deux positions angulaires différentes 9, 10 autour de ladite tige 4.

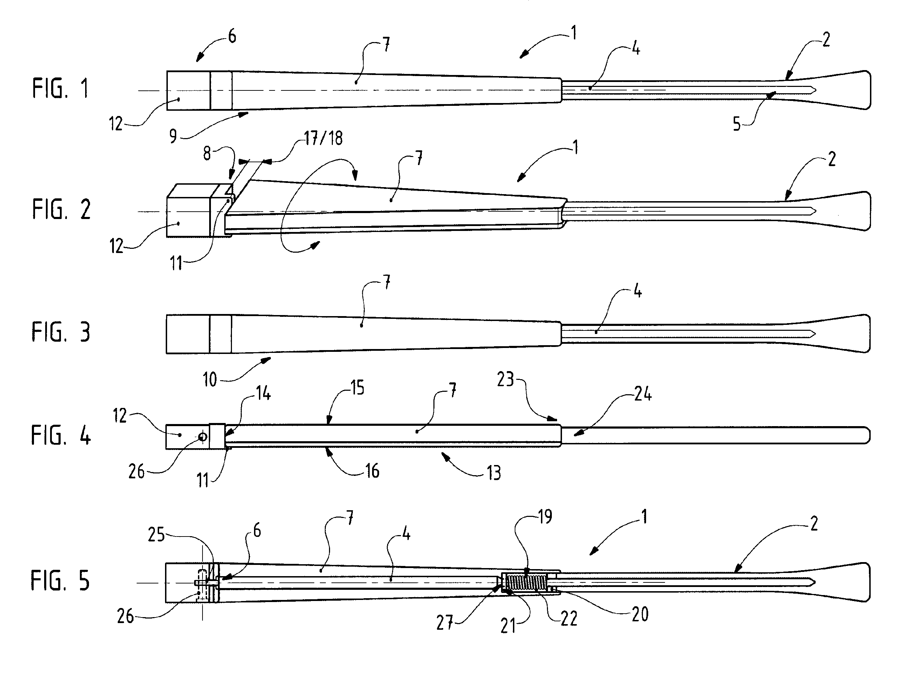

Ainsi, comme visible dans la figure 3, le profilé d'habillage 7, dans sa seconde position 10 a été tourné de 180° autour de l'axe défini par la tige 4, ceci par rapport à sa première position 9 qu'il occupait initialement dans la figure 1.

On observera que la présente invention ne saurait être limitée à une telle conception où le profilé d'habillage 7 ne peut occuper que deux positions distinctes par pivotement de 180° autour de la tige 4.

Quant aux moyens de blocage 8, ils sont définis, avantageusement, par un rebord d'appui 11 équipant la tige 4 de manière apte à coopérer avec le profilé d'habillage 7 pour en empêcher la rotation de celui-ci. Dans le mode de réalisation représenté, ce rebord d'appui est ménagé au niveau d'un bloc de liaison 12 dont est rendue solidaire la tige 4, à son extrémité 6 opposée à l'embout de branche 2.

En particulier, le bloc de liaison 12 peut correspondre à un charnon d'une charnière de type connue contribuant, dans une monture de lunettes, à la liaison d'une branche et un cerclage de verre ou à un verre.

Selon une autre particularité de l'invention, le rebord d'appui 11 définit, du côté externe 13 d'une branche de lunette 1, un recouvrement du plan de joint 14 entre le profilé d'habillage 7 et ledit bloc de liaison 12.

En d'autres termes, ce rebord d'appui 11 vient coopérer, en position de blocage, avec l'un des côtés 15, 16 du profilé d'habillage 7 pour en empêcher la rotation. Aussi, dans le but de permettre le pivotement de ce profilé d'habillage 7, celui-ci est monté avec une mobilité axiale relative sur la tige 4, mobilité dont la course 17 est au moins égale à la longueur axiale 18 dudit rebord d'appui 11.

Tout particulièrement, cette mobilité axiale relative du profilé d'habillage 7 s'exécute contre l'action de moyens de rappel élastiques 19 sous forme d'un ressort hélicoïdal monté sur la tige 4, entre une butée d'appui 20 et le fond 21 d'un évidement 22 que comporte ledit profilé d'habillage 7 à son extrémité 23 orientée en direction de l'embout de branche 2.

Avantageusement, la butée d'appui 20 est définie par le chant d'extrémité 24 de l'embout de branche 2 le long de la tige 4.

Aussi, on remarquera, à ce propos, qu'une conception inversée est envisageable consistant à ménager l'évidement dans ce chant d'extrémité de l'embout de branche, la butée d'appui étant alors définie par l'extrémité correspondante du profilé d'habillage 7.

De manière à rendre ces moyens de rappel élastiques 19 invisibles, selon la conception envisagée, c'est-à-dire selon que l'évidement est ménagé au niveau du profilé d'habillage 7 ou de l'embout de branche 2, le premier vient légèrement en recouvrement du second ou inversement, même en position de blocage en rotation dudit profilé d'habillage 7.

Par ailleurs, au moins sur la longueur de la course 17, une partie d'extrémité 24 de l'embout de branche 2 est conçue de section adaptée à l'évidement 22 dans le profilé d'habillage 7. Evidemment, dans le cas d'une conception inversée, c'est le profilé d'habillage 7 qui est conçu à même de venir s'insérer dans l'évidemment alors ménagé au niveau de l'embout de branche 2 sur une longueur correspondant à cette course 17, en vu de permettre le déblocage et la rotation dudit profilé d'habillage 7.

La présente invention s'étend encore à un mode de réalisation où les moyens de blocage 8, au lieu d'être associés au bloc de liaison 12, viennent se situer du côté de l'extrémité 5 de la tige 4, c'est-à-dire vers l'embout de branche 2. Dans ce cas, les moyens de rappel élastiques 19 prennent position du côté de l'extrémité 3 opposée de la branche 1, c'est-à-dire entre le bloc de liaison 12 et ledit profilé d'habillage 7. Ainsi, pour le déboîtement et le pivotement on tire sur ce profil d'habillage 7 en direction des verres. Là encore, ces moyens de rappel élastiques 19, sous forme d'un ressort, peuvent être rendus invisibles en assurant leur logement dans un évidemment dans ledit profilé d'habillage 7 ou, selon le cas, dans le bloc de liaison 12. Selon la configuration adoptée, l'un vient en recouvrement de l'autre avec possibilité d'emboitement sur une course autorisant le déboitement et le retournement dudit profilé d'habillage 7.

Dans le cadre d'une conception de branche de lunette conforme à l'invention, ceci selon le mode de réalisation illustré dans les dessins, le montage et l'assemblage d'une telle branche s'avère de réalisation très simple :
. On engage sur la tige 4, depuis son extrémité 5, le ressort des moyens de rappel élastique 19 ;
. On monte sur cette extrémité 5 de la tige 4 l'embout de branche 2 ;
. On insère sur l'extrémité opposée 6 de cette tige 4, le profilé d'habillage 7;
. On équipe ladite extrémité 6 de la tige 4 du bloc de liaison 12. A ce propos, cette extrémité 6 de la tige 4 est pourvue d'un oeillet 25 susceptible d'être reçu dans un logement du bloc de liaison 12, lequel peut recevoir alors une goupille 26 pour assurer le maintien assemblé de l'ensemble.

On observera que le long de la tige 4 peut être prévu un épaulement 27 qui maintien en position le ressort 19 avant l'engagement du profilé d'habillage 7. La tige 4 avec ce ressort 19 et l'embout de branche 2 peuvent constituer un sous ensemble que l'on équiper à volonté de différents profilé d'habillage lors de la conception d'une paire de lunette.

Tel qu'il ressort de la description qui précède, la présente invention vient répondre de manière astucieuse au problème posé. En particulier, la solution selon l'invention s'avère de conception simple et de mise en oeuvre aisée.

## Revendications

1. Branche de lunettes (1) comportant une tige (4) formant une armature conçue apte, à une extrémité (6), à être rendue solidaire, fixe en rotation, d'un verre ou cerclage de verre et portant, à l'extrémité opposée (5), un embout de branche (2) de type support d'oreille, qui est rendu solidaire fixement de ladite extrémité correspondante (5) de la tige (4), et sur ladite tige (4) étant engagé, de manière pivotante, un profilé, d'habillage (7) conçu apte à être immobilisé dans au moins deux positions angulaires (9,10) différentes autour de la tige (4) grâce à des moyens de blocage en rotation (8) adaptés, ledit profilé d'habillage (7) étant conçu pour être repoussé depuis une position de blocage dans une position de déblocage contre l'action de moyens de rappels élastiques (19), **caractérisée par le fait que** les moyens de rappel élastiques (19) sont formés par un ressort hélicoïdal monté sur la tige (4) entre une butée d'appui (20) et le fond (21) d'un évidement (22) que comporte, selon le cas, le profilé d'habillage (7) et/ou l'embout de branche (2) et/ou un bloc de liaison (12) dont est rendue solidaire la tige (4) à son extrémité (6) opposée audit embout de branche (2), évidement (22) dans lequel prend position ledit ressort.

2. Branche de lunettes selon la revendication 1, **caractérisée en ce que** les moyens de blocage (8) sont formés par un rebord d'appui (11) équipant la tige (4) de manière apte à coopérer avec le profilé d'habillage (7) pour en empêcher la rotation de celui-ci.

3. Branche de lunettes selon la revendication 2, **caractérisée en ce que** le rebord d'appui (11) est ménagé au niveau d'un bloc de liaison (12) dont est rendue solidaire la tige (4), à son extrémité (6) opposée à l'embout de branche (2).

4. Branche de lunettes selon la revendication 2 ou 3, **caractérisée en ce que** le rebord d'appui (11) vient coopérer, en position de blocage, avec l'un des côtés (15, 16) du profilé d'habillage (7) pour en empêcher la rotation.

5. Branche de lunettes selon la revendication 3, **caractérisée en ce que** le rebord d'appui (11) définit, du côté externe (13) de ladite branche de lunette (1), un recouvrement du plan de joint (14) entre le profilé d'habillage (7) et ledit bloc de liaison (12).

6. Branche de lunettes selon la revendication 2, **caractérisée en ce que** le rebord d'appui (11) est ménagé du côté de l'extrémité (5) de la tige (4), comportant l'embout de branche (2).

7. Paire de lunettes comportant au moins une branche de lunettes selon l'une des revendications précédentes.

## Claims

1. Side-piece for spectacles (1) including a shaft (4) forming a frame designed capable, at one end (6), of being made integral, fixed in rotation, with a lens or lens ring and bearing, at the opposite end (5), a side-piece cap (2) of the ear support type, which is made integral fixedly with said corresponding end (5) of the shaft (4), and onto said shaft (4) being inserted, pivotally, a casing profile (7) designed capable of being immobilized in at least two different angular positions (9, 10) around the shaft (4) through appropriate means for blocking in rotation (8), said casing profile (7) being designed to be pushed from a blocked position into an unblocked position against the action of the elastic restoring means (19), wherein the elastic restoring means (19) are formed by a helical spring mounted on the shaft (4) between a bearing stop (20) and the bottom (21) of a recess (22) provided for, as the case may be, in the casing profile (7) and/or the side-piece cap (2) and/or a linking block (12), which the shaft (4) is made integral with at its end (6) opposite said side-piece cap (2), recess (22) in which is positioned said spring.

2. Side-piece for spectacles according to claim 1, wherein the blocking means (8) are formed by a support rim (11), which the shaft (4) is provided with so as to be able to cooperate with the casing profile (7) in order to prevent the rotation of the latter.

3. Side-piece for spectacles according to claim 2, wherein the support rim (11) is arranged at the level of a linking block (12), which the shaft (4) is made integral with, at its end (6) opposite the side-piece cap (2).

4. Side-piece for spectacles according to claim 2 or 3, wherein the support rim (11) cooperates, in the blocked position, with one of the sides (15, 16) of the casing profile (7) in order to prevent the rotation thereof.

5. Side-piece for spectacles according to claim 3, wherein the support rim (11) defines, on the external side (13) of said side-piece for spectacles (1), a covering of the joining plane (14) between the casing profile (7) and said linking block (12).

6. Side-piece for spectacles according to claim 2, wherein the support rim (11) is arranged on the side of the end (5) of the shaft (4) including the side-piece cap (2).

7. Pair of glasses, including at least one side-piece for spectacles according to one of the preceding claims.

## Patentansprüche

1. Bügel für Brille (1), umfassend eine, eine Bewehrung bildende Stange (4), die geeignet vorgesehen ist, um an einem Ende (6) drehfest mit einem Glas oder Glasumfassung fest verbunden zu werden, und an dem gegenüberliegenden Ende (5) ein Bügelendstuck (2) der Art Ohrstütze, das fest mit dem besagten entsprechenden Ende (5) der Stange (4) verbunden ist, und wobei auf der besagten Stange (4) schwenkbar ein Überzugsprofil (7) aufgesteckt ist, das geeignet vorgesehen ist, um dank geeigneter Drehsperrmittel (8) in wenigstens zwei ungterschiedlichen Winkellagen (9, 10) um die Stange (4) herum unbeweglich gemacht zu werden, wobei das besagte Überzugsprofil (7) vorgesehen ist, um gegen der Wirkung von elastischen Rückstellmitteln (19) von einer gesperrten Lage in eine entsperrte Lage gedrückt zu werden, **dadurch gekennzeichnet, dass** die elastischen Rückstellmittel (19) aus einer Spiralfeder bestehen, die auf der Stange (4) zwischen einem Auflageanschlag (20) und dem Boden (21) einer Ausnehmung (22), die je nach dem Fall das Überzugsprofil (7) und/oder das Stangenendstück (2) und/oder ein Verbindungsblock (12), mit dem die Stange (4) an ihrem dem besagten Stangenendstück (2) gegenüberliegenden Ende (6) fest verbunden ist, montiert ist, in welcher Ausnehmung (22) die besagte Feder positioniert ist.

2. Bügel für Brille nach Anspruch 1, **dadurch gekennzeichnet, dass** die Sperrmittel (8) aus einem Auflagerand (11) bestehen, mit dem die Stange (4) geeignet versehen ist, um mit dem Überzugsprofil (7) zusammenzuwirken, um die Drehung dieses letzteren zu verhindern.

3. Bügel für Brille nach Anspruch 2, **dadurch gekennzeichnet, dass** der Auflagerand (11) im Bereich eines Verbindungsblocks (12) angeordnet ist, mit dem die Stange (4) an ihrem dem Stangenendstück (2) gegenüberliegenden Ende (6) fest verbunden ist.

4. Bügel für Brille nach Anspruch 2 oder 3, **dadurch gekennzeichnet, dass** der Auflagerand (11) in gesperrter Lage mit einer der Seiten (15, 16) des Überzugsprofils (7) zusammenwirkt, um die Drehung dieses letzteren zu verhindern.

5. Bügel für Brille nach Anspruch 3, **dadurch gekennzeichnet, dass** der Auflagerand (11) an der äußeren Seite (13) des besagten Brillenbügels (1) einen Überzug für die Verbindungsebene (14) zwischen dem Überzugsprofil (7) und dem besagten Verbindungsblock (12) definiert.

6. Bügel für Brille nach Anspruch 2, **dadurch gekennzeichnet, dass** der Auflagerand (11) an der Seite des Endes (5) der Stange (4), das das Bügelenstück (2) umfasst, angeordnet ist.

7. Brille, umfassend wenigstens einen Brillenbügel nach einem der vorgehenden Ansprüche.
